# FASCICULE DE BREVET EUROPEEN

(11) **EP 3 722 149 B1**
(45) Date de publication et mention de la délivrance du brevet: **08.12.2021**
(21) Numéro de dépôt: 20169096.3
(22) Date de dépôt: 09.04.2020
(51) Int. Cl.: B60N 2/815, B60N 2/821, B60N 2/888, B60N 2/897

(54) **SYSTEME D'APPUI-TETE DE SIEGE DE VEHICULE AUTOMOBILE**
KOPFSTÜTZENSYSTEM FÜR SITZ EINES KRAFTFAHRZEUGS
HEADREST SYSTEM FOR A MOTOR VEHICLE SEAT

(30) Priorité: 12.04.2019 FR 1903924
(43) Date de publication de la demande: 14.10.2020
(73) Titulaire: TESCA France, 75008 Paris (FR)
(72) Inventeur: BONTE, Emmanuel, 51100 Reims (FR); DAUCHEZ, Fernand, 75008 Paris (FR); HORNY, Frederic, 75008 Paris (FR)
(74) Mandataire: Sayettat, Julien Christian

(56) Documents cités:
- EP-A1- 3 025 905
- EP-A1- 3 124 321
- FR-A1- 3 009 809

## Description

L'invention concerne un système d'appui-tête de siège de véhicule automobile et un appui-tête d'un tel système.

Il est connu de réaliser dans le document EP-A-3 025 905 un système d'appui-tête de siège de véhicule automobile, ledit système comprenant :
- un appui-tête pourvu d'une armature, ladite armature comprenant une première et une deuxième tige métalliques parallèles, la partie supérieure de ladite armature étant recouverte d'un coussin, au moins ladite première tige étant pourvue d'un cran d'anti-extraction sous forme de tranchée, ledit cran présentant une face inférieure de blocage de ladite première tige en coulissement vers le haut,
- un premier et un deuxième manchon de réception en coulissement respectivement desdites première et deuxième tige, lesdits manchons étant destinés à être montés de manière fixe en haut de dossier dudit siège, au moins ledit premier manchon étant pourvu en son extrémité supérieure :
   ∘ d'un tiroir monté en coulissement radial et présentant une bordure de crantage agencée pour pouvoir s'insérer dans ledit cran quand ils sont disposés en regard l'un de l'autre,
   ∘ d'un ressort d'actionnement en coulissement dudit tiroir de manière à permettre l'insertion de ladite bordure dans ledit cran.

Le rôle du cran d'anti-extraction est d'empêcher l'appui-tête d'être projeté dans l'habitacle du véhicule en cas d'accident, de par la présence de la face de crantage inférieure, une telle situation pouvant être néfaste pour la sécurité des passagers.

Cependant, en cas de choc violent de la tête du passager contre l'appui-tête, notamment lorsque l'impact de la tête est décentré par rapport à la zone médiane dudit appui-tête, il peut se produire une rotation axiale, dans un sens ou dans l'autre, de la première tige, par « effet de manivelle ».

Le cran d'anti-extraction se trouve alors décalé angulairement par rapport au tiroir qui n'assure plus son rôle de blocage de la première tige en coulissement vers le haut, ce qui entraîne un risque d'éjection de l'appui-tête dans le véhicule.

L'invention a pour but de pallier cet inconvénient.

A cet effet, et selon un premier aspect, l'invention propose un système d'appui-tête de siège de véhicule automobile, ledit système comprenant :
- un appui-tête pourvu d'une armature, ladite armature comprenant une première et une deuxième tige métalliques parallèles, la partie supérieure de ladite armature étant recouverte d'un coussin, au moins ladite première tige étant pourvue d'un cran d'anti-extraction sous forme de tranchée, ledit cran présentant une face inférieure de blocage de ladite première tige en coulissement vers le haut,
- un premier et un deuxième manchon de réception en coulissement respectivement desdites première et deuxième tige, lesdits manchons étant destinés à être montés de manière fixe en haut de dossier dudit siège, au moins ledit premier manchon étant pourvu en son extrémité supérieure :
   ∘ d'un tiroir monté en coulissement radial et présentant une bordure de crantage agencée pour pouvoir s'insérer dans ledit cran quand ils sont disposés en regard l'un de l'autre,
   ∘ d'un ressort d'actionnement en coulissement dudit tiroir de manière à permettre l'insertion de ladite bordure dans ledit cran,
ledit système présentant en outre les caractéristiques suivantes :
- ladite première tige est pourvue d'une saillie, ladite saillie saillant radialement de l'enveloppe générale de ladite première tige,
- ledit premier manchon est pourvu d'une gorge s'étendant axialement de manière à recevoir de façon ajustée ladite saillie en coulissement,
- la distance entre ledit cran et ladite saillie est définie de sorte que ladite saillie soit disposée dans ladite gorge quand ladite bordure est insérée dans ledit cran, de manière à bloquer ladite première tige en rotation axiale en cas de choc de la tête d'un passager contre ledit appui-tête.

Dans cette description, les termes de positionnement dans l'espace (inférieur, supérieur, haut, dessous, vertical,...) sont pris en référence à l'appui-tête disposé dans le véhicule en situation d'utilisation.

Quant aux termes « axial », « axialement », « radial » et « radialement », ils sont pris en référence à l'axe d'extension de la première tige.

Par l'expression « de façon ajustée », on entend que la saillie est confinée dans la gorge de manière à ne pouvoir sensiblement pas débattre angulairement, selon l'axe de la tige, de part et d'autre de sa position nominale Avec l'agencement proposé, en cas de choc de la tête du passager contre l'appui-tête, la première tige est donc bloquée en rotation axiale par la saillie, ce qui permet d'éviter un désengagement du tiroir du cran d'anti-extraction et une projection éventuelle de l'appui-tête dans l'habitacle du véhicule.

On notera que le tiroir peut aussi servir à faire un réglage en hauteur de l'appui-tête si la première tige est pourvue de plusieurs crans échelonnés en hauteur, lesdits crans étant alors pourvus d'une face de crantage supérieure permettant de bloquer ladite tige en coulissement vers le bas.

Selon un deuxième aspect, l'invention propose un appui-tête d'un tel système selon la revendication 5.

D'autres particularités et avantages de l'invention apparaîtront dans la description qui suit, faite en référence aux figures jointes, dans lesquelles :

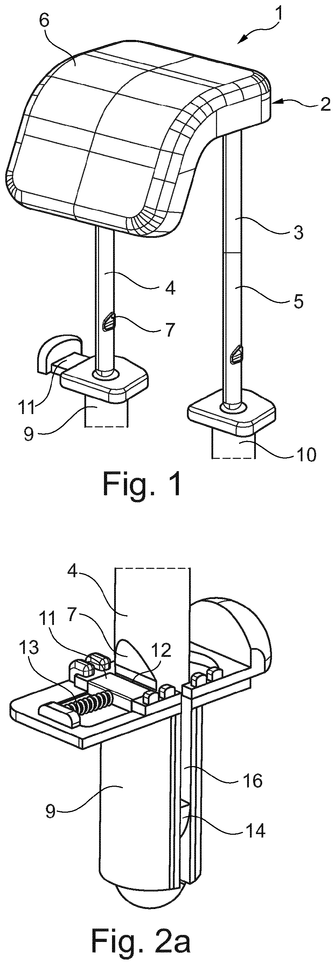

[Fig.1] est une représentation schématique en perspective partielle d'ensemble d'un système selon une réalisation,
[Fig.2a] est une vue en perspective de détail du système de la figure 1 selon un mode de réalisation, le tiroir étant inséré dans le cran d'anti-extraction,

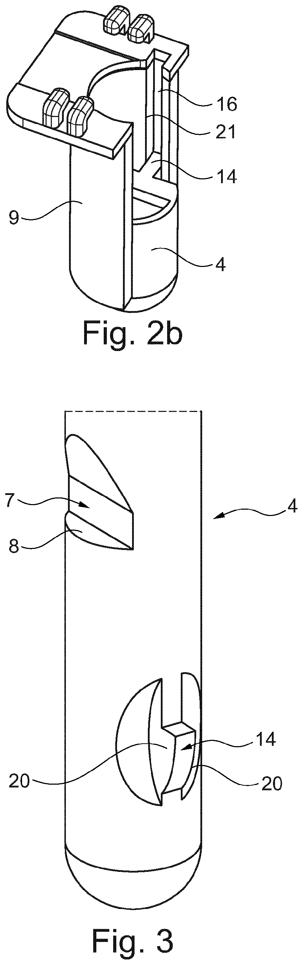

[Fig.2b] est une vue partielle écorchée analogue à la figure 2a et prise sous un autre angle de vue,
[Fig.3] est une vue en perspective de détail d'une première tige selon le mode de réalisation des figures 2 et 3.

En référence aux figures, on décrit un système 1 d'appui-tête de siège de véhicule automobile, ledit système comprenant :
- un appui-tête 2 pourvu d'une armature 3, ladite armature comprenant une première 4 et une deuxième 5 tige métalliques ― notamment tubulaires ― parallèles, la partie supérieure de ladite armature étant recouverte d'un coussin 6, au moins ladite première tige étant pourvue d'un cran d'anti-extraction 7 sous forme de tranchée, ledit cran présentant une face inférieure 8 de blocage de ladite première tige en coulissement vers le haut,
- un premier 9 et un deuxième 10 manchon ― notamment en matériau plastique moulé ― de réception en coulissement respectivement desdites première et deuxième tige, lesdits manchons étant destinés à être montés de manière fixe en haut de dossier dudit siège, au moins ledit premier manchon étant pourvu en son extrémité supérieure :
   ∘ d'un tiroir 11 monté en coulissement radial et présentant une bordure de crantage 12 agencée pour pouvoir s'insérer dans ledit cran quand ils sont disposés en regard l'un de l'autre,
   ∘ d'un ressort 13 d'actionnement en coulissement dudit tiroir de manière à permettre l'insertion de ladite bordure dans ledit cran,
ledit système présentant en outre les caractéristiques suivantes :
- ladite première tige est pourvue d'une saillie 14, ladite saillie saillant radialement de l'enveloppe générale de ladite première tige,
- ledit premier manchon est pourvu d'une gorge 16 s'étendant axialement de manière à recevoir de façon ajustée ladite saillie en coulissement,
- la distance entre ledit cran et ladite saillie est définie de sorte que ladite saillie soit disposée dans ladite gorge quand ladite bordure est insérée dans ledit cran, de manière à bloquer ladite première tige en rotation axiale en cas de choc de la tête d'un passager contre ledit appui-tête.

La saillie 14 est notamment réalisée par pincement de la première tige 4.

Selon la réalisation représentée, la saillie 14 est sous forme d'une dent, notamment de hauteur inférieure ou égale à 10 mm.

Selon une réalisation non représentée, la saillie 14 est sous forme d'une nervure longiligne s'étendant axialement présentant une hauteur supérieure à 10 mm, un tel agencement permettant l'application d'une pression moindre de ladite saillie contre la gorge 16, et ainsi un blocage en rotation optimisé de la première tige 4.

Selon la réalisation représentée, la saillie 14 comprend deux parois latérales 20 s'inscrivant dans des plans verticaux, la gorge 16 étant pourvue de deux parois verticales réciproques 21 planes contre lesquelles se positionnent lesdites parois latérales.

Bien entendu, un agencement analogue à celui décrit pour la première tige 4 et le premier manchon 9 peut être appliqué sur la deuxième tige 5 et le deuxième manchon 10, afin de renforcer le blocage en rotation.

On décrit enfin un appui-tête 2 d'un tel système 1, ledit appui-tête étant pourvu d'une armature 3 comprenant une première 4 et une deuxième 5 tige métalliques parallèles, la partie supérieure de ladite armature étant recouverte d'un coussin 6, au moins ladite première tige étant pourvue d'un cran d'anti-extraction 7 sous forme de tranchée, ledit cran présentant une face inférieure 8 de blocage de ladite première tige en coulissement vers le haut, ladite première tige étant pourvue d'une saillie 14, ladite saillie saillant radialement de l'enveloppe générale de ladite première tige.

Le coussin 6 peut par exemple être sous la forme d'un bloc de mousse souple surmoulant le haut de l'armature, ledit bloc étant revêtu d'une coiffe de matériau de revêtement.

## Revendications

1. Système (1) d'appui-tête de siège de véhicule automobile, ledit système comprenant :
• un appui-tête (2) pourvu d'une armature (3), ladite armature comprenant une première (4) et une deuxième (5) tige métalliques parallèles, la partie supérieure de ladite armature étant recouverte d'un coussin (6), au moins ladite première tige étant pourvue d'un cran d'anti-extraction (7) sous forme de tranchée, ledit cran présentant une face inférieure (8) de blocage de ladite première tige en coulissement vers le haut,
• un premier (9) et un deuxième (10) manchon de réception en coulissement respectivement desdites première et deuxième tige, lesdits manchons étant destinés à être montés de manière fixe en haut de dossier dudit siège, au moins ledit premier manchon étant pourvu en son extrémité supérieure :
∘ d'un tiroir (11) monté en coulissement radial et présentant une bordure de crantage (12) agencée pour pouvoir s'insérer dans ledit cran quand ils sont disposés en regard l'un de l'autre,
∘ d'un ressort (13) d'actionnement en coulissement dudit tiroir de manière à permettre l'insertion de ladite bordure dans ledit cran,
ledit système étant **caractérisé en ce que** :
• ladite première tige est pourvue d'une saillie (14), ladite saillie saillant radialement de l'enveloppe générale de ladite première tige,
• ledit premier manchon est pourvu d'une gorge (16) s'étendant axialement de manière à recevoir de façon ajustée ladite saillie en coulissement,
• la distance entre ledit cran et ladite saillie est définie de sorte que ladite saillie soit disposée dans ladite gorge quand ladite bordure est insérée dans ledit cran, de manière à bloquer ladite première tige en rotation axiale en cas de choc de la tête d'un passager contre ledit appui-tête.

2. Système selon la revendication 1, **caractérisé en ce que** la saillie (14) est sous forme d'une dent de hauteur inférieure ou égale à 10 mm.

3. Système selon la revendication 1, **caractérisé en ce que** la saillie (14) est sous forme d'une nervure longiligne s'étendant axialement présentant une hauteur supérieure à 10 mm.

4. Système selon l'une quelconque des revendications 1 à 3, **caractérisé en ce que** la saillie (14) comprend deux parois latérales (20) s'inscrivant dans des plans verticaux, la gorge (16) étant pourvue de deux parois verticales réciproques (21) planes contre lesquelles se positionnent lesdites parois latérales.

5. Appui-tête (2) d'un système (1) selon l'une quelconque des revendications précédentes, ledit appui-tête étant pourvu d'une armature (3) comprenant une première (4) et une deuxième (5) tige métalliques parallèles, la partie supérieure de ladite armature étant recouverte d'un coussin (6), au moins ladite première tige étant pourvue d'un cran d'anti-extraction (7) sous forme de tranchée, ledit cran présentant une face inférieure (8) de blocage de ladite première tige en coulissement vers le haut, ledit appui-tête étant **caractérisé en ce que** ladite première tige est pourvue d'une saillie (14), ladite saillie saillant radialement de l'enveloppe générale de ladite première tige.

## Patentansprüche

1. Kopfstützensystem (1) für einen Sitz eines Kraftfahrzeugs, wobei das System umfasst:
• eine Kopfstütze (2), die mit einer Armatur (3) versehen ist, wobei die Armatur eine erste (4) und eine zweite (5) parallele Metallstange umfasst, wobei der obere Teil der Armatur mit einem Kissen (6) überzogen ist, wobei mindestens die erste Stange mit einer Ausziehsperrraste (7) in Form eines Grabens versehen ist, wobei die Raste eine Unterseite (8) zum Blockieren der ersten Stange aufweist, um nicht nach oben zu gleiten,
• eine erste (9) und eine zweite (10) Gleitaufnahmemuffe jeweils der ersten und zweiten Stange, wobei die Muffen dazu bestimmt sind, feststehend oben an der Rückenlehne des Sitzes angebracht zu werden, wobei mindestens die erste Muffe an ihrem oberen Ende versehen ist mit:
∘ einem Schieber (11), der radial gleitend angebracht ist, und eine Rasterungsumrandung (12) aufweist, um in die Raste eingeführt werden zu können, wenn sie einander gegenüber angeordnet sind,
∘ eine Feder (13) zur gleitenden Betätigung des Schiebers, derart, um das Einführen der Umrandung in die Raste zu ermöglichen,
wobei das System **dadurch gekennzeichnet ist, dass**:
• die erste Stange mit einem Vorsprung (14) versehen ist, wobei der Vorsprung radial aus der allgemeinen Hülle der ersten Stange hervorspringt,
• die erste Muffe mit einer Nut (16) versehen ist, die sich axial derart erstreckt, um den Vorsprung in angepasster Form gleitend aufzunehmen,
• der Abstand zwischen der Raste und dem Vorsprung derart definiert ist, dass der Vorsprung in der Nut angeordnet ist, wenn die Umrandung in die Raste eingeführt ist, um die erste Stange im Falle eines Aufpralls des Kopfes eines Fahrgastes auf die Kopfstütze in axialer Drehung zu blockieren.

2. System nach Anspruch 1, **dadurch gekennzeichnet, dass** der Vorsprung (14) in Form eines Zahnes mit einer Höhe kleiner oder gleich 10 mm ist.

3. System nach Anspruch 1, **dadurch gekennzeichnet, dass** der Vorsprung (14) in Form einer sich axial erstreckenden länglichen Rippe ist, und eine Höhe von mehr als 10 mm aufweist.

4. System nach einem der Ansprüche 1 bis 3, **dadurch gekennzeichnet, dass** der Vorsprung (14) zwei Seitenwände (20) umfasst, die sich in Vertikalebenen einfügen, wobei die Nut (16) mit zwei gegenseitigen ebenen vertikalen Wänden (21) versehen ist, an denen sich die Seitenwände positionieren.

5. Kopfstütze (2) eines Systems (1) nach einem der vorstehenden Ansprüche, wobei die Kopfstütze mit einer Armatur (3) versehen ist, die eine erste (4) und eine zweite (5) parallele Metallstange umfasst, wobei der obere Teil der Armatur mit einem Kissen (6) überzogen ist, wobei mindestens die erste Stange mit einer Ausziehsperrraste (7) in Form eines Grabens versehen ist, wobei die Raste eine Unterseite (8) zum Blockieren der ersten Stange aufweist, um nicht nach oben zu gleiten, wobei die Kopfstütze **dadurch gekennzeichnet ist, dass** die erste Stange mit einem Vorsprung (14) versehen ist, wobei der Vorsprung radial aus der allgemeinen Hülle der ersten Stange hervorspringt.

## Claims

1. A headrest system (1) for a motor vehicle seat, said system comprising:
• a headrest (2) provided with a framework (3), said framework comprising parallel first (4) and second (5) metallic rods, the upper portion of said framework being covered with a cushion (6), at least said first rod being provided with an anti-extraction notch (7) in the form of a trench, said notch having a lower face (8) for blocking said first rod in upward sliding,
• first (9) and second (10) sleeves for slidably receiving said first and second rods respectively, said sleeves being intended to be fixedly mounted at the top of the backrest of said seat, at least said first sleeve being provided at its upper end with:
∘ a slider (11) mounted so as to slide radially and having a ratchet track (12) arranged so as to be able to be inserted into said notch when they are disposed opposite one another,
∘ a spring (13) for slidably actuating said slider so as to enable the insertion of said track into said notch, said system being **characterised in that**:
• said first rod is provided with a projection (14), said projection projecting radially from the general outline of said first rod,
• said first sleeve is provided with a groove (16) extending axially so as to fittedly receive said projection in sliding,
• the distance between said notch and said projection is defined so that said projection is disposed in said groove when said track is inserted into said notch, so as to block said first rod in axial rotation in the event of an impact of the head of a passenger against said headrest.

2. The system according to claim 1, **characterised in that** the projection (14) is in the form of a tooth with a height smaller than or equal to 10 mm.

3. The system according to claim 1, **characterised in that** the projection (14) is in the form of an elongate rib extending axially having a height larger than 10 mm.

4. The system according to any one of claims 1 to 3, **characterised in that** the projection (14) comprises two lateral walls (20) inscribed within vertical planes, the groove (16) being provided with two planar reciprocal vertical walls (21) against which said lateral walls are positioned.

5. A headrest (2) of a system (1) according to any one of the preceding claims, said headrest being provided with a framework (3) comprising parallel first (4) and second (5) metallic rods, the upper portion of said framework being covered with a cushion (6), at least said first rod being provided with an anti-extraction notch (7) in the form of a trench, said notch having a lower face (8) for blocking said first rod in upward sliding, said headrest being **characterised in that** said first rod is provided with a projection (14), said projection projecting radially from the general outline of said first rod.
